# EUROPEAN PATENT SPECIFICATION

(11) **EP 4 265 344 B1**
(45) Date of publication and mention of the grant of the patent: **24.09.2025**
(21) Application number: 23194799.5
(22) Date of filing: 24.08.2021
(51) Int. Cl.: B07B 1/46, B07B 1/56, B07B 1/58, B07B 1/12, B07B 1/20, B07B 1/24, B07B 1/55, B07B 1/22

(54) **SCREENING DEVICE, SCREENING SYSTEM AND SCREENING METHOD**
SIEBVORRICHTUNG, SIEBSYSTEM UND SIEBVERFAHREN
DISPOSITIF CRIBLE, SYSTÈME CRIBLE ET PROCÉDÉ DE CRIBLAGE

(30) Priority: 25.08.2020 FI 20205830
(43) Date of publication of application: 25.10.2023
(62) Divisional of application: 21769157.5
(73) Proprietor: EcoUp Oyj, 90100 Oulu (FI)
(72) Inventor: Hirvensalo, Ilari, Mäntsälä (FI)
(74) Representative: Wilenius, Jami Juhani

(56) References cited:
- WO-A1-2014/059539
- CA-A1- 3 031 109
- CN-A- 103 293 912
- CN-U- 204 769 495
- US-A- 3 511 374
- US-B1- 6 182 833

## Description

### FIELD OF THE INVENTION

The invention relates to screening devices and systems, as well as to a method for screening dry source material.

### PRIOR ART

In many fields dry source material is ground into smaller particles using a ball mill. Screening of the ground source material is typically done using a separator which separates fine particles and coarse particles. The coarse particles are then transported back to the ball mill for further grinding. This consumes a lot of energy when the same material has to pass through the ball mill and the separator multiple times.

In laboratory environment a small batch of material can be ground until there are no coarse particles left. In industrial scale and in continuous processes dust accumulation becomes a problem and prevents further grinding of the dry source material.

US3511374 discloses a screening device for removing oversize particles from a fluid. The screening device has a cylindrical screen, means for introducing a fluid to be screened, means for removing screened fluid and means for introducing gaseous media under pressure, in the form of high-pressure jets, for removing clogged material from the screen.

### BRIEF DESCRIPTION OF THE INVENTION

The object of the invention is a device, a system and a method which alleviate the drawbacks of the prior art.

Object of the invention is achieved with a screening device according to claim 1. This arrangement allows for continuous screening of dry source material without transporting different-sized fractions to separate processing devices.

### BRIEF DESCRIPTION OF THE FIGURES

The invention is now described in more detail in connection with preferred embodiments, with reference to the accompanying drawings, in which:
Fig. 1 illustrates a screening device according to an embodiment;
Fig. 2 illustrates a screening system according to an embodiment;
Fig. 3 shows a cross-section of a screening device according to an embodiment;
Fig. 4 shows a cross-section of a detail of a declogging nozzle according to an embodiment; and
Fig. 5 illustrates a screening device according to an embodiment without a perforated support structure.

### DETAILED DESCRIPTION OF THE INVENTION

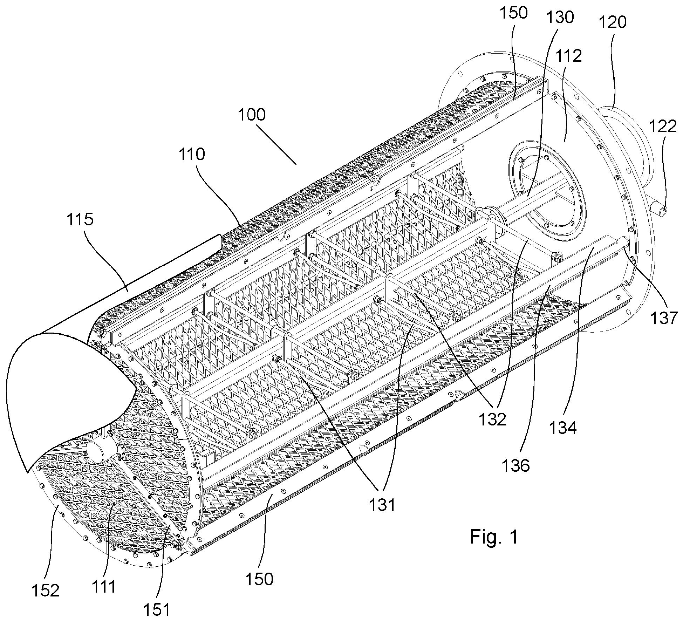

Figure 1 shows a screening device 100 according to an embodiment of the present disclosure. The screening device comprises a screen cloth 115 for separating a screened fraction from source material. The screen cloth is preferably the outermost part of the screening device and designed to be easily removable from the screening device so that the screen cloth can be replaced with a different one if source material changes or if a screened fraction of a different size distribution is desired. In an embodiment, the screen cloth 115 has a shape of a hollow right circular cylinder having a closed end and an open end. A screen cloth of this shape can be easily slid onto the screening device and it has a largely surface area for screening the source material.

Size of openings in the screen cloth, i.e. a pore size defines size of particles of the screened fraction that passes through the screen cloth. Preferably, the screen cloth 115 has a pore size of at least 30 micrometers and at most 1000 micrometers.

The screening device 100 further comprises a perforated support structure 110, 111 for supporting the screen cloth 115. The perforated support structure keeps the screen cloth 115 in a tubular shape and prevents it from collapsing when suction is applied. The support structure is preferably a metal wire mesh, metal lath or an expanded perforated metal sheet. Preferably the metal used in the support structure is stainless steel.

In an embodiment of the present disclosure the support structure comprises a tubular section 110 and a planar section 111 where the planar section 111 closes one end of the tubular section 110. This type of embodiment is shown in Figure 1 and the tubular section 110 consists of three identical parts attached to three longitudinal support beams 150 extending in the longitudinal direction of the tubular shape. On one end of the tubular section 110 may be an annular support 152 to which the three parts of the tubular section of the support structure may be attached. The three longitudinal support beams 150 may also be attached to the annular support 152 for example by bolts and nuts or by welding. The planar section 111 consists of three identical parts attached to three radial support beams 151 extending in radial direction of the tubular shape. The three radial support beams 151 may be attached to the annular support 152 for example by bolts and nuts or by welding. Alternatively, the planar section 111 consists of a single perforated support structure that is welded to the radial support beams 151 and/or the annular support 152. The other end of the tubular section 111, opposite to the planar section 111 and the annular support 152, comprises an end plate 112 which has a different structure than the support structure. The three longitudinal support beams 150 may also be attached to the end plate 112 for example by bolts and nuts or by welding. The three longitudinal support beams preferably extend between the annular support 152 and the end plate 112. Preferably, the end plate is a steel plate having apertures for input and output.

In an embodiment where the tubular section 110 consists of three parts and the three longitudinal support beams 150, the screen cloth 115 of the tubular part preferably consists of three parts, each part being attached to two of the three support beams and stretched between the two support beams.

The screening device 100 comprises an outlet 120 for the screened fraction to exit the screening device. The outlet is preferably located on the end plate 112. The screening device 100 also comprises an inlet 122 for introducing compressed air in to the screening device. The inlet is preferably located on the end plate 112 and in an embodiment the inlet 122 is arranged within the outlet 120 as shown in Figures 1, 3 and 5. The outlet 122 preferably comprises a tubular extension into which a pipe or a hose can be attached for applying suction and for removing the screened fraction from inside the screening device. Within said tubular extension of the outlet, a smaller tubular extension can be provided to form an inlet 122. The smaller tubular extension of the inlet 122 is in a fluid connection with a main air pipe 130 which preferably runs in the middle of the outlet 120 and extends the whole length, or substantially the whole length, of the screening device. The main air pipe 130 acts preferably also as a rotation shaft about which the support structure 110, 111 and the screen cloth 115 are configured to rotate.

As suction is applied via the outlet 120, the source material outside the screening device 100 will be drawn against the screen cloth 115. Particles small enough to pass through the pores of the screen cloth 115 will end up inside the screening device while larger particles accumulate against the screen cloth 115. The accumulation severely reduces screening capability of the screen cloth by clogging the screen cloth. The screening device further comprises a declogging nozzle 136, 137 for blowing out the accumulated larger particles thereby restoring the screening capability. Compressed air introduced via the inlet 122 flows into the main air pipe 130 and from there to the declogging nozzle through one or more air tubes 131. The main air pipe 130 and the one or more air tubes 131 form an air conduit extending between said inlet 122 and said declogging nozzle 136, 137. The declogging nozzle is configured to direct a flow of compressed air from the inlet 122 against the screen cloth 115 for declogging the screen cloth.

In an embodiment of the present disclosure the screening device comprises at least one declogging nozzle 136, 137 configured to direct a flow of compressed air from the inlet 122 against the screen cloth through the tubular section 110 of the perforated support structure and at least one declogging nozzle configured to direct a flow of compressed air from the inlet 122 against the screen cloth through the planar section 111 of the perforated support structure.

In an embodiment the declogging nozzle comprises a tube 136 having one or more apertures 137 facing the perforated support structure 110, 111. The compressed air is blown through the perforations of the support structure and through pores of the screen cloth 115 thereby clearing the pores from larger particles.

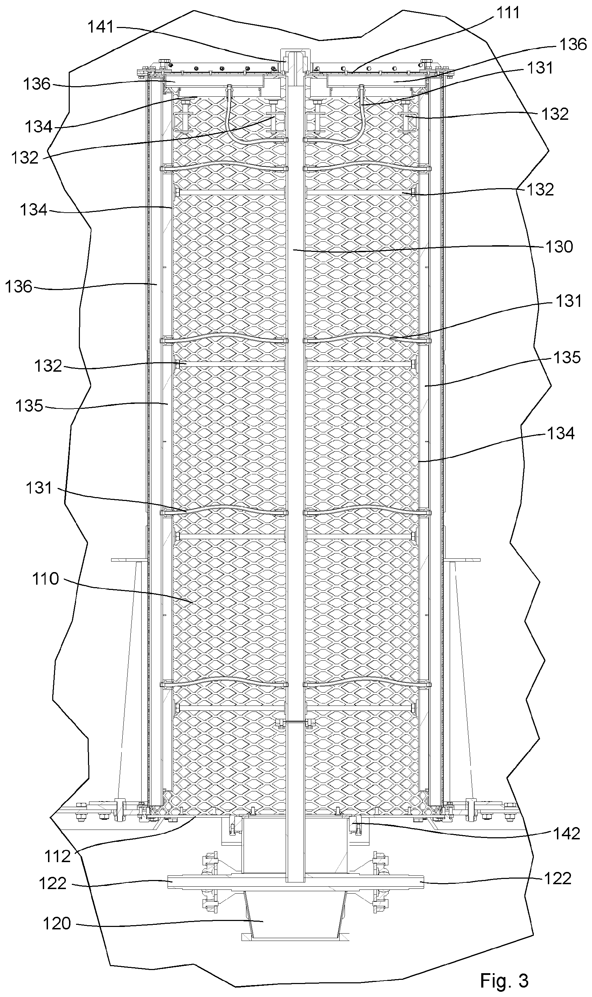

In an embodiment the declogging nozzle comprises a tube 136 having a slot 137 extending substantially the whole length of the tube 136. One or more air tubes 131 connect the main air pipe 130 to the tube 136. The slot 137 can have a width of at least 0,1 mm and at most 1,0 mm. The width of the slot 137 is most preferably about 0,2 mm. The slot 137 extends through the wall of the tube 136. Instead of a long slot, also multiple shorter slots can be used but also circular apertures next to each other forming a line. Preferably there are two declogging nozzles for the tubular section 110 of the support structure and two declogging nozzles for the planar section 111 of the support structure, as shown for example in Figure 3. One or more declogging nozzles can be supported by rods 132 extending between the main air pipe 130 and the declogging nozzle(s).

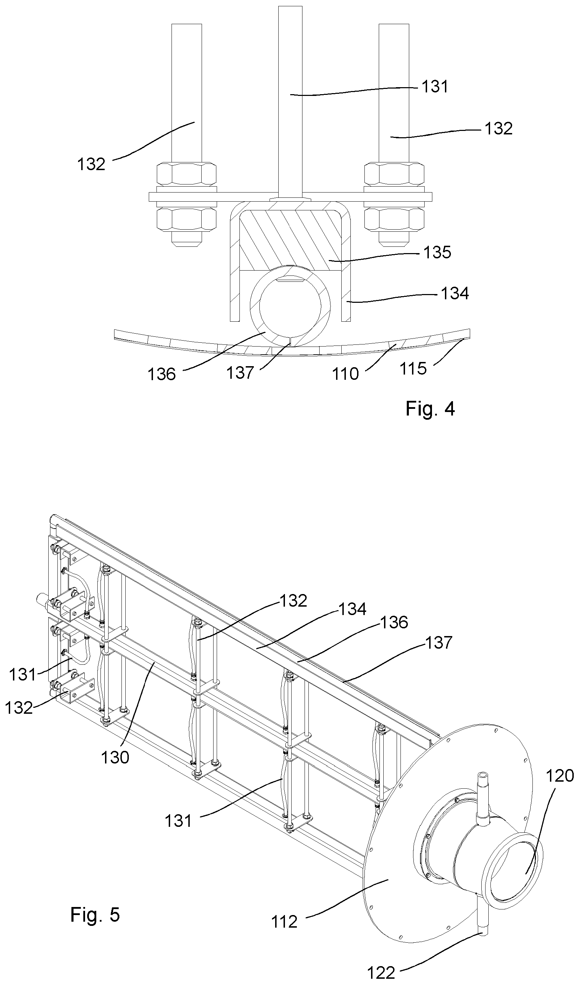

Looking at Figure 4 now, the screening device can further comprise a nozzle support 134 having an elastic member 135 located between the nozzle support 134 and the declogging nozzle 136, 137. The elastic member 135 is compressible material which compresses when a force applied and returns to its original shape when the force is no longer applied. Preferably, the nozzle support substantially encases the declogging nozzle 136, 137 in a space delimited by said nozzle support 134, the elastic member and said perforated support structure 110, 111. The nozzle support 134 and the elastic member 135 allow movement of the declogging nozzle in radial direction of the tubular shape but substantially prevent movement of the declogging nozzle in circumferential direction of the tubular shape. This arrangement keeps the declogging nozzle in contact with the perforated support structure regardless of manufacturing tolerances and other minor deviations in dimensions. In an embodiment, the nozzle support 134 is a U-shaped profile having width larger that the diameter of the tube 136 of the declogging nozzle. In this embodiment, the slot 137 of the declogging nozzle faces exactly opposite direction to the bottom of the U-shape of the nozzle support. The elastic member can be arranged inside and at the bottom of the U-shaped nozzle support. The nozzle support 134 is made of metal, plastic or other substantially rigid material. Where one or more nozzle supports 134 are used, the declogging nozzle(s) can be fixed to the nozzle support(s) which are supported by rods 132 extending between the main air pipe 130 and the nozzle support(s). The one or more air tubes 131 are preferably flexible tubes, especially when using the nozzle support and the elastic member, to allow for a radial movement of the declogging nozzle.

The declogging nozzle performs the declogging locally and therefore the perforated support structure 110, 111 and the screen cloth 115 are rotatable in relation to the inlet 122, the air conduit 130, 131 and the declogging nozzle 136, 137. A first bearing member 141 is provided around the main air pipe 130, or an extension thereof, and a second bearing member 142 is provided around the tubular extension of the outlet 120. The bearing members can be provided in a form of low-friction sliding surfaces or ball bearings. When the screening device 100 is installed into a ball mill 200, the end plate 112 is attached to an end of the ball mill. Thus the end plate 112 as well as the perforated support structure 110, 111 are rigidly attached to the ball mill. When the ball mill is rotated, the perforated support structure also rotates along with the ball mill. The outlet 120 and the inlet 122, as well as the air conduit 130, 131 and the declogging nozzle 136, 137, remain stationary due to the bearing members 141, 142. This rotating action allows for a continuous declogging of the screen cloth 115 of the screening device.

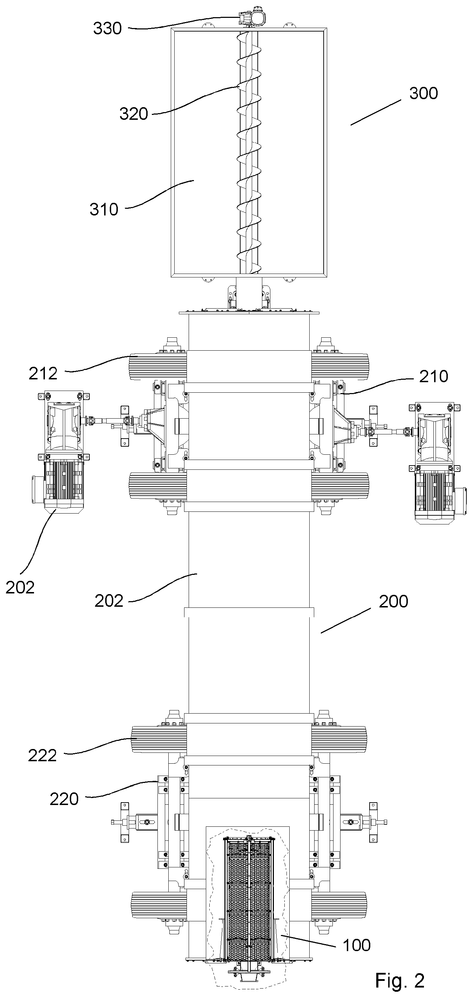

Figure 2 illustrates another aspect of the present disclosure which is a screening system. The screening system comprises a rotatable ball mill 200 for milling source material into smaller particles. The ball mill 200 comprises a cylindrical chamber 202 and at least one rotating device 210. Each rotating device comprising a motor 202 and one or more rollers 212 in contact with the outside of the chamber where the one or more rollers 212 are configured to be rotated by said motor 202. The ball mill may also comprise idle rollers which merely support the chamber but are not connected to a motor. Instead of rollers, also toothed gears can be used. In that case matching teeth are provided on the outer surface of the cylindrical chamber 202.

The system also comprises a feeding device 300 configured to feed source material into said ball mill 200. Preferably the feeding device 300 is a screw feeder and comprises a container 310, a screw 320 at least partially inside the container 310 and a motor 330 for rotating the screw 320.

The system further comprises a screening device 100 of the present disclosure. The screening device 100 is at least partially inside said ball mill 200. The outlet 120 and the inlet 122 of the screening device are accessible from the outside of the ball mill 200.

Yet another aspect of the present disclosure is a method of screening dry source material. The method comprises steps of:
- feeding source material into a ball mill 200,
- milling the source material into smaller particles inside the ball mill 200,
- screening the source material with a screening device 100 located partially inside the ball mill 200 forming a screened fraction inside the screening device,
- declogging a screen cloth 115 of the screening device with compressed air, and
- removing the screened fraction from the screening device by suction via an outlet 120 of the screening device.

The method characterized by that the screening device 100 is a screening device of the present disclosure. In an embodiment, the dry source material is recycled wool, or some other building material. In an embodiment, the screened fraction comprises at least 90 weight-% of geopolymers. In an embodiment, the method is a method of producing geopolymers from recycled wool.

It is obvious to the skilled person in the art that, as technology develops, the basic idea of the invention can be implemented in various ways. The invention and its embodiments may vary within the scope of the claims.

## Claims

1. A screening device (100) comprising
a screen cloth (115) for separating a screened fraction from source material,
a perforated support structure (110, 111) for supporting the screen cloth (115),
an outlet (120) for the screened fraction,
an inlet (122) for compressed air,
a declogging nozzle (136, 137), and
an air conduit (130, 131) extending between said inlet (122) and said declogging nozzle (136, 137) configured to direct a flow of compressed air from the inlet (122) against the screen cloth (115),
wherein the screening device (100) is **characterized in that** said perforated support structure (110, 111) and said screen cloth are rotatable in relation to said inlet (122), said air conduit (130, 131) and said declogging nozzle (136, 137) that are stationary.

2. A screening device (100) according to claim 1, wherein the perforated support structure comprises a tubular section (110) and a planar section (111) where the planar section (111) closes one end of the tubular section (110).

3. A screening device (100) according to claim 2, wherein the screening device (100) comprises at least one declogging nozzle (136, 137) configured to direct a flow of compressed air from the inlet (122) against the screen cloth through the tubular section (110) of the perforated support structure and at least one declogging nozzle configured to direct a flow of compressed air from the inlet (122) against the screen cloth through the planar section (111) of the perforated support structure.

4. A screening device (100) according to any one of claims 1 to 3, wherein said declogging nozzle comprises a tube (136) having one or more apertures (137) facing the perforated support structure (110, 111).

5. A screening device (100) according to any one of claims 1 to 4, wherein said declogging nozzle comprises a tube (136) having a slot (137) extending substantially the whole length of the tube (136), where the slot (137) has a width of at least 0,1 mm and at most 1,0 mm.

6. A screening device (100) according to any one of claims 1 to 5, wherein the screening device further comprises a nozzle support (134) substantially encasing the declogging nozzle (136, 137) in a space delimited by said nozzle support (134) and said perforated support structure (110, 111), where the nozzle support (134) allows for movement or the declogging nozzle (136, 137) in radial direction and prevents substantial movement of the declogging nozzle in circumferential direction.

7. A screening device (100) according to claim 6, wherein the screening device further comprises a compressible, elastic member (135) between the nozzle support (134) and the declogging nozzle (136, 137) for pressing the declogging nozzle (136, 137) into a contact with the perforated support structure (110, 111).

8. A screening device (100) according to any one of claims 1 to 7, wherein the screen cloth (115) has a pore size of at least 30 micrometers and at most 1000 micrometers.

9. A screening system comprising
a rotatable ball mill (200) for milling source material into smaller particles, and
a feeding device (300) configured to feed source material into said ball mill (200),
**characterized in that** the screening system further comprises
a screening device (100) according to any one of claims 1 to 8, wherein said screening device (100) is at least partially inside said ball mill (200).

10. A screening system according to claim 9, wherein the rotatable ball mill (200) comprises a cylindrical chamber (202), at least one rotating device (210), each rotating device comprising a motor (202) and one or more rollers (212) in contact with the outside of the chamber, said one or more rollers (212) being configured to be rotated by said motor (202).

11. A screening system according to claim 9 or 10, wherein the feeding device (300) is a screw feeder and comprises a container (310), a screw (320) at least partially inside the container (310) and a motor (330) for rotating the screw (320).

12. A method of screening dry source material, wherein the method comprises steps of:
feeding source material into a ball mill (200),
milling the source material into smaller particles inside the ball mill (200),
screening the source material with a screening device (100) located partially inside the ball mill (200) forming a screened fraction inside the screening device,
declogging a screen cloth (115) of the screening device with compressed air, and
removing the screened fraction from the screening device by suction via an outlet (120) of the screening device,
wherein the method is **characterized in that** the screening device is a screening device according to any one of claims 1 to 8.

13. A method according to claim 12, wherein the dry source material is recycled wool.

14. A method according to claim 12 or 13, wherein the screened fraction comprises at least 90 weight-% of geopolymers.

## Patentansprüche

1. Siebvorrichtung (100), umfassend:
ein Siebgewebe (115) zum Abtrennen einer gesiebten Fraktion vom Ausgangsmaterial,
eine perforierte Stützstruktur (110, 111) zum Stützen des Siebgewebes (115),
einen Auslass (120) für die gesiebte Fraktion,
einen Einlass (122) für die Druckluft,
eine Entstopfungsdüse (136, 137) und
eine Luftleitung (130, 131), die sich zwischen dem Einlass (122) und der Entstopfungsdüse (136, 137) erstreckt und dazu geeignet ist, einen Druckluftstrom vom Einlass (122) gegen das Siebgewebe (115) zu richten,
wobei die Siebvorrichtung (100) **dadurch gekennzeichnet ist, dass** sich die perforierte Stützstruktur (110, 111) und das Siebgewebe in Bezug auf den Einlass (122), die Luftleitung (130, 131) und die Entstopfungsdüse (136, 137) drehbar sind, welche feststehend sind.

2. Siebvorrichtung (100) nach Anspruch 1, wobei die perforierte Stützstruktur einen rohrförmigen Abschnitt (110) und einen ebenen Abschnitt (111) umfasst, wobei der ebene Abschnitt (111) ein Ende des rohrförmigen Abschnitts (110) verschließt.

3. Siebvorrichtung (100) nach Anspruch 2, wobei die Siebvorrichtung (100) mindestens eine Entstopfungsdüse (136, 137) zum Richten eines Druckluftstroms vom Einlass (122) durch den rohrförmigen Abschnitt (110) der perforierten Stützstruktur gegen das Siebgewebe und mindestens eine Entstopfungsdüse zum Richten eines Druckluftstroms vom Einlass (122) durch den ebenen Abschnitt (111) der perforierten Stützstruktur gegen das Siebgewebe umfasst.

4. Siebvorrichtung (100) nach einem der Ansprüche 1 bis 3, wobei die Entstopfungsdüse ein Rohr (136) mit einer oder mehreren der perforierten Stützstruktur (110, 111) zugewandten Öffnungen (137) umfasst.

5. Siebvorrichtung (100) nach einem der Ansprüche 1 bis 4, wobei die Entstopfungsdüse ein Rohr (136) mit einem sich im Wesentlichen über die gesamte Länge des Rohrs (136) erstreckenden Schlitz (137) umfasst, wobei der Schlitz (137) eine Breite von mindestens 0,1mm und höchstens 1,0mm aufweist.

6. Siebvorrichtung (100) nach einem der Ansprüche 1 bis 5, wobei die Siebvorrichtung weiterhin einen Düsenhalter (134) umfasst, der die Entstopfungsdüse (136, 137) in einem durch den Düsenhalter (134) und die perforierte Stützstruktur (110, 111) begrenzten Raum im Wesentlichen umschließt, und wobei der Düsenhalter (134) eine Bewegung der Entstopfungsdüse (136, 137) in radialer Richtung ermöglicht und eine wesentliche Bewegung der Entstopfungsdüse in Umfangsrichtung verhindert.

7. Siebvorrichtung (100) nach Anspruch 6, wobei die Siebvorrichtung weiterhin ein komprimierbares elastisches Element (135) zwischen dem Düsenhalter (134) und der Entstopfungsdüse (136, 137) zum Drücken der Entstopfungsdüse (136, 137) in Kontakt mit der perforierten Stützstruktur (110, 111) umfasst.

8. Siebvorrichtung (100) nach einem der Ansprüche 1 bis 7, wobei das Siebgewebe (115) eine Porengröße von mindestens 30 Mikrometern und höchstens 1000 Mikrometern aufweist.

9. Siebsystem mit
einer Rotationskugelmühle (200} zum Mahlen ines Ausgangsmaterials in kleinere Partikel und
einer Versorgungseinrichtung (300) zum Versorgen der Kugelmühle (200) mit dem Ausgangsmaterial,
**dadurch gekennzeichnet, dass** das Siebsystem weiterhin umfasst:
eine Siebvorrichtung (100) nach einem der Ansprüche 1 bis 8, wobei sich die Siebvorrichtung (100) zumindest teilweise innerhalb der Kugelmühle (200) befindet.

10. Siebsystem nach Anspruch 9, wobei die Rotationskugelmühle (200) eine zylindrische Kammer (202) und mindestens eine Rotationseinrichtung (210) umfasst, wobei jede Rotationseinrichtung einen Motor (202) und eine oder mehrere Rollen (212) in Kontakt mit der Außenseite der Kammer umfasst, wobei die eine oder mehreren Rollen (212) durch den Motor (202) gedreht werden können.

11. Siebsystem nach Anspruch 9 oder 10, wobei die Versorgungseinrichtung (300) eine Schneckenversorgungseinrichtung ist und einen Behälter (310), eine zumindest teilweise innerhalb des Behälters (310) angeordnete Schnecke (320) und einen Motor (330) zum Drehen der Schnecke (320) umfasst.

12. Verfahren zum Sieben eines trockenen Ausgangsmaterials, wobei das Verfahren die folgenden Schritte umfasst:
Versorgen einer Kugelmühle (200) mit einem Ausgangsmaterial,
Mahlen des Ausgangsmaterials in kleinere Partikel in der Kugelmühle (200),
Sieben des Ausgangsmaterials mit einer Siebvorrichtung (100), die sich teilweise innerhalb der Kugelmühle (200) befindet und innerhalb der Siebvorrichtung eine gesiebte Fraktion bildet,
Entstopfen eines Siebgewebes (115) der Siebvorrichtung mit Druckluft und
Absaugen der gesiebten Fraktion aus der Siebvorrichtung über einen Auslass (120) der Siebvorrichtung,
wobei das Verfahren **dadurch gekennzeichnet ist, dass** die Siebvorrichtung eine Siebvorrichtung nach einem der Ansprüche 1 bis 8 ist.

13. Verfahren nach Anspruch 12, wobei das trockene Ausgangsmaterial Recyclingwolle ist.

14. Verfahren nach Anspruch 12 oder 13, wobei die gesiebte Fraktion mindestens 90 Gew.-% Geopolymere umfasst.

## Revendications

1. Dispositif de tamisage (100) comprenant
une toile formant tamis (115) destinée séparer une fraction tamisée du matériau source,
une structure de support perforée (110, 111) detinée à supporter la toile formant tamis (115),
une sortie (120) destinée à la fraction tamisée,
une entrée (122) destinée à l'air comprimé,
une buse de désobstruction (136, 137), et
un conduit d'air (130, 131) s'étendant entre ladite entrée (122) et ladite buse de désobstruction (136, 137) et conçu pour diriger un flux d'air comprimé depuis l'entrée (122) contre la toile formant tamis (115),
le dispositif de tamisage (100) étant **caractérisé en ce que** ladite structure de support perforée (110, 111) et ladite toile formant tamis étant rotatives par rapport à ladite entrée (122), audit conduit d'air (130, 131] et à ladite buse de désobstruction (136, 137), qui sont fixes.

2. Dispositif de tamisage (100) selon la revendication 1, la structure de support perforée comprenant une portion tubulaire (110) et une portion plane (111), la portion plane (111) fermant une extrémité de la portion tubulaire (110).

3. Dispositif de tamisage (100) selon la revendication 2, le dispositif de tamisage (100) comprenant au moins une buse de désobstruction (136, 137) conçue pour diriger un flux d'air comprimé depuis l'entrée (122) contre la toile formant tamis à travers la portion tubulaire (110) de la structure de support perforée et au moins une buse de désobstruction conçue pour diriger un flux d'air comprimé de l'entrée (122) contre la toile formant tamis à travers la portion plane (111) de la structure de support perforée.

4. Dispositif de tamisage (100) selon l'une quelconque des revendications 1 à 3, ladite buse de désobstruction comprenant un tube (136) pourvu d'une ouverture (137) ou plus, lesquelles sont dirigées la structure de support perforée (110, 111).

5. Dispositif de tamisage (100) selon l'une quelconque des revendications 1 à 4, ladite buse de désobstruction comprenant un tube (136) comportant une fente (137) qui s'étend sensiblement sur toute la longueur du tube (136), la fente (137) ayant une largeur d'au moins 0,1 mm et d'au plus 1,0 mm.

6. Dispositif de tamisage (100) selon l'une quelconque des revendications 1 à 5, le dispositif de tamisage comprenant en outre un support de buse (134) qui enferme sensiblement la buse de désobstruction (136, 137) dans un espace délimité par ledit support de buse (134) et ladite structure de support perforée (110, 111), le support de buse (134) permettant un mouvement de la buse de désobstruction (136, 137) dans la direction radiale et empêchant un mouvement important de la buse de désobstruction dans la direction circonférentielle.

7. Dispositif de tamisage (100) selon la revendication 6, le dispositif de tamisage comprenant en outre un élément élastique compressible (135) situé entre le support de buse (134) et la buse de désobstruction (136, 137) et destiné à presser la buse de désobstruction (136, 137) pour l'amener en contact avec la structure de support perforée (110, 111).

8. Dispositif de tamisage (100) selon l'une quelconque des revendications 1 à 7, la toile formant tamis (115) ayant une taille de pores d'au moins 30 micromètres et d'au plus 1000 micromètres.

9. Système de tamisage comprenant
un broyeur à boulets rotatif (200} destiné à broyer le matériau source en particules plus petites, et
un dispositif d'alimentation (300) conçu pour alimenter ledit broyeur à boulets (200) en matériau source,
**caractérisé en ce que** le système de tamisage comprend en outre
un dispositif de tamisage (100) selon l'une quelconque des revendications 1 à 8, ledit dispositif de tamisage (100) étant situé au moins partiellement à l'intérieur dudit broyeur à boulets (200).

10. Système de tamisage selon la revendication 9, le broyeur à boulets rotatif (200) comprenant une chambre cylindrique (202), au moins un dispositif rotatif (210), chaque dispositif rotatif comprenant un moteur (202) et un ou plusieurs rouleaux (212) en contact avec l'extérieur de la chambre, lesdits un ou plusieurs rouleaux (212) étant conçus pour être entraînés en rotation par ledit moteur (202).

11. Système de tamisage selon la revendication 9 ou 10, le dispositif d'alimentation (300) étant un alimentateur à vis et comprenant un récipient (310), une vis (320) située au moins partiellement à l'intérieur du récipient (310) et un moteur (330) destiné à faire tourner la vis (320).

12. Procédé de tamisage d'un matériau source sec, le procédé comprenant les étapes suivant :
alimenter un broyeur à boulets (200) en matériau source,
broyer le matériau source en particules plus petites à l'intérieur du broyeur à boulets (200),
tamiser le matériau source avec un dispositif de tamisage (100), situé partiellement à l'intérieur du broyeur à boulets (200) et formant une fraction tamisée à l'intérieur du dispositif de tamisage,
désobstruer une toile formant tamis (115) du dispositif de tamisage avec de l'air comprimé, et
retirer la fraction tamisée du dispositif de tamisage par aspiration par le biais d'une sortie (120) du dispositif de tamisage,
le procédé étant **caractérisé en ce que** le dispositif de tamisage est un dispositif de tamisage selon l'une quelconque des revendications 1 à 8.

13. Procédé selon la revendication 12, le matériau source sec étant de la laine recyclée.

14. Procédé selon la revendication 12 ou 13, la fraction tamisée comprenant au moins 90 % en poids de géopolymères.
